# EUROPEAN PATENT APPLICATION

(11) **EP 3 737 064 A1**
(43) Date of publication of application: **11.11.2020**
(21) Application number: 19173221.3
(22) Date of filing: 08.05.2019
(51) Int. Cl.: H04L 29/06, H04L 29/08

(54) **APPARATUS, SYSTEM AND METHOD FOR SECURING DATA TRANSFER BETWEEN PROTECTED AUTOMATION SYSTEM AND NETWORK**

(71) Applicant: ABB Schweiz AG, 5400 Baden (CH)
(72) Inventor: Kohvakka, Mikko, 00380 Helsinki (FI); Kallio, Janne, 00380 Helsinki (FI)
(74) Representative: Kolster Oy Ab

(57) **Abstract**

An apparatus for securing a data transfer between a protected automation system and a network. The apparatus comprises a local controllable user interface coupled with the protected automation system. The local controllable user interface comprises a first state and a second state. The local controllable user interface within the first state is configured to enable a unidirectional data transfer from the protected automation system to the network and to disable the data transfer from the network to the protected automation system. The local controllable user interface, when set to the second state by a physical contact of a user, is configured to enable at least the data transfer from the network to the protected automation system.

## Description

### FIELD OF THE INVENTION

The invention relates to a network connected automation system, and more particularly to a solution for securing a data transfer between the automation system and the network.

### BACKGROUND OF THE INVENTION

Cloud services are widely used in various industrial sectors. Many automation systems are nowadays connected to the network to get an access to the cloud services and this trend is emerging. Security of the network connection is still concern particularly with protected automation systems. The protected automation system refers to devices and systems, wherein an access of externals may cause a security risk and lead to significant damages. Many times the protected automation system is not connected to the network because of a risk of hacking. Still significant benefits may be achieved when connecting the automation system with the cloud services.

Current security solutions for securing the network connection may not be effective for the protected automation systems. Hence, there is a need for a sophisticated solution for securing the data transfer between the automation system and the network.

### BRIEF DESCRIPTION OF THE INVENTION

The invention is defined by the independent claims.

Embodiments of the invention are defined in the dependent claims.

### BRIEF DESCRIPTION OF THE DRAWINGS

Example embodiments of the present invention are described below, by way of example only, with reference to the accompanying drawings, in which
Figures 1A, 1B and 1C illustrate an apparatus according to an embodiments;
Figure 2 illustrates the apparatus according to an embodiment;
Figures 3A and 3B illustrate the apparatus according to an embodiment;
Figure 4 illustrates a system according to an embodiment; and
Figure 5 illustrates a flow diagram of a process according to an embodiment.

### DETAILED DESCRIPTION OF THE INVENTION

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

As described in Background, connecting the automation systems with the cloud services is an emerging trend in the various industrial sectors. Many advantages may be achieved when connecting the automation systems with the cloud services. For example, a manufacturer of the automation system may provide a service for monitoring a usage of the automation system in customer facilities remotely. This enables continuous monitoring of a condition of the automation system in real-time that is great benefit particularly from a predictive maintenance point of view. In addition, the cloud services enable remote controlling and updating of the automation device and system.

There is, however, one drawback in the use of the cloud services with the automation systems. An access to a public network is usually needed to get an access to the cloud services and a security of the public network is a concern particularly with the protected automation systems. Particularly the access from the network to the automation system is concern because irrelevant persons may get the access into the automation system. As described in Background, the protected automation systems refers to the systems, wherein the access of the irrelevant persons may cause a security risk and lead to significant damages. Hence, the connection to the public network must be properly secured to avoid the access of the irrelevant persons to the automation systems.

One example of the protected automation system may be a ship which engine(s) may have the cloud connection. Hackers may be able to get an access into the engines(s) via the network connection, and cause remarkable damages. The hackers may be capable to control the engine(s) of the ship and, for example, turn off them that may have devastating consequences. Another example of the protected automation system may be machines in factories like, for example, paper machines. If the hackers get an access to the paper machines via the network connection, they may be capable to control and/or shut down the machines.

There are many solutions available to secure the network connection but still many users of the automation systems are not willing to connect the protected automation systems with the cloud. The present invention provides a sophisticated solution for securing the data transfer from the network to the protected automation system.

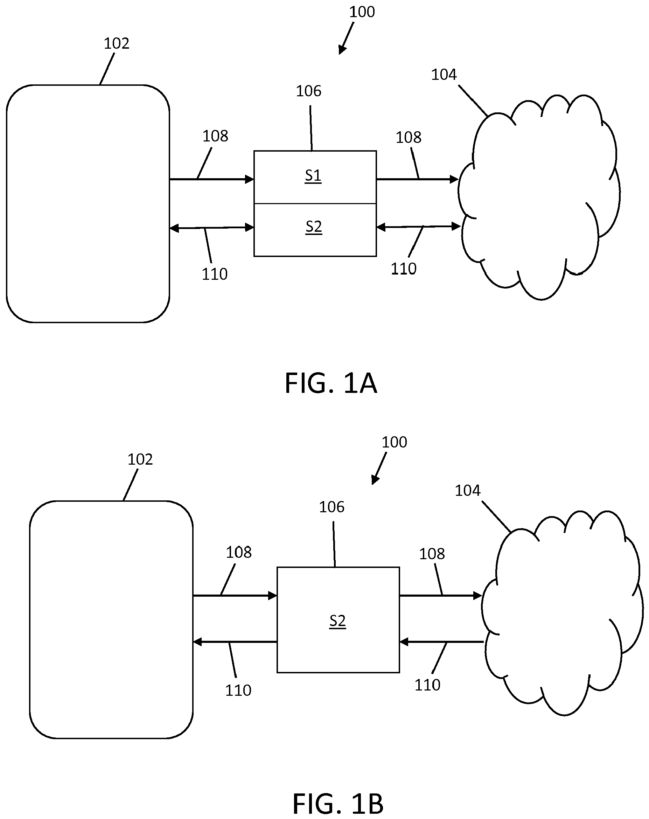

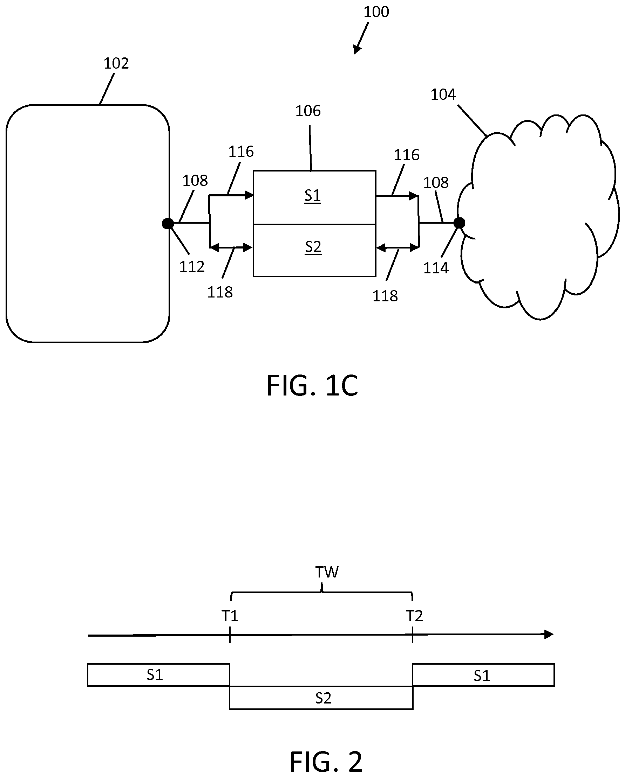

Referring to Figure 1, an apparatus 100 for securing a data transfer between a protected automation system 102 and a network 104, comprising: a local controllable user interface 106 coupled with the protected automation system 102, wherein the local controllable user interface 106 comprises a first state S1 and a second state S2, wherein the local controllable user interface 106 within the first state S1 is configured to enable a unidirectional data transfer from the protected automation system 102 to the network 104 and to disable the data transfer from the network 104 to the protected automation system 102, and wherein the local controllable user interface 106, when set to the second state by a physical contact of a user, is configured to enable at least the data transfer from the network 104 to the protected automation system 102.

In an embodiment, the local controllable user interface 106 in the first state S1 is configured to allow the data transfer from the automation system 102 to network 104. There is, in the first state S1 of the local controllable interface 106, the unidirectional connection between the automation system 102 and the network 104 allowing the data transfer from the automation system 102 to the network 104. The data transfer from the network 104 to the automation system 102 may be disabled in the first state S1. In other words, the data transfer may not be possible from the network 104 to the automation system 102 when the local user interface 106 is in the first state S1.

The unidirectional connection between the automation system 102 and the network 104 enables the data transfer from the automation system 102 to network 104 like, for example, to a cloud service. The cloud service may be, for example, a service platform, provided by a manufacturer of the automation system 102, for offering remote services to users of the automation systems. The service platform may be applied, for example, for monitoring remotely a condition of the automation system 102. The monitoring may be performed, for example, from predictive maintenance point of view. The automation system 102 may provide information regular basis relating an operation to detect, for example, malfunctions and/or needs for updating a firmware of the automation system 102. The information may comprise counters and/or meters to indicate a condition and/or estimated remaining lifetime of components of the automation system 102. The information may also comprise, for example, defect codes from the automation system 102.

In an embodiment, the local controllable user interface 106 can be set from the first state S1 to the second state S2. The data transfer from the network 104 to the automation system 102 is enabled when the local controllable user interface is in the second state S2. The switch from the first state S1 to the second state S2 may be performed by a physical contact of the user of the local controllable user interface 106, in other words, the user must physically switch the local controllable interface 106 from the first state S1 to the second state S2. The user refers, for example, to an operator of the automation system 102 who is in the same facility with the automation system 102 and have a physical access to the local controllable user interface 106. The physical switching by the user may always be required when changing the state of the local controllable user interface 106 and hence, the local controllable user interface 106 may not be controlled software basis. Hence, the local controllable user interface 106 cannot be controlled remotely. In other words, when switching the local controllable user interface 106 between the first state S1 and the second state S2, the user's presence is required in the immediate vicinity of the local controllable user interface 106 and user must physically be in contact with the local controllable user interface 106. The presence and physical contact of the user ensure that the local controllable user interface 106 cannot be hacked and switched from the first state S1 to the second S2 remotely via the public network 104 allowing the data transfer from the network 104 to the automation system 102.

The local controllable user interface 106 in the second state S2 enables data transfer at least from the network 104 to the automation system 102. Hence, the automation system 102 may be controlled, for example, via the cloud service remotely. For example, software updates, adjusting settings and parameters of the automation system 102 and troubleshooting may be possible to perform remotely, when the data transfer from the network 104 to the automation system 102 is enabled.

In an embodiment, the local controllable user interface 106 is in the first state S1 during a normal use of the automation system 102. The network connection is the unidirectional, only allowing the data transfer from the automation system 102 to the network 104. Hence, the automation system 102 is capable to provide information about its operation to the cloud service via the unidirectional network connection 108. The automation system 102 may provide the defect codes to the cloud system and request, for example, to update the firmware. When the needed firmware update is available, the state of the local controllable user interface 106 is switch, by the physical contact of the user who is nearby the local controllable user interface 106, from the first state S1 to the second state S2. When the local controllable user interface 106 is in the second state S2, the data transfer from the cloud service to the automation system 102 is enabled and the firmware update can be performed remotely via the network connection 110. When the update is completed, the state of the local controllable user interface 106 is set from the second state S2 back to the first state S1 and the data transfer from the cloud service to the automation system 102 is disabled again.

The invention provides very effective and simple solution for securing the data transfer from the network 104 to the automation system 102. The data transfer from the network 104 to the automation system 102 is blocked when the local controllable user interface 106 is in the first state S1 and hence, irrelevant persons cannot get the access to the automation system 102. The enabling of the data transfer from the network 104 to the automation system 102 requires the physical contact of the user to switch the local controllable user interface 106 to second state S2 and hence, irrelevant persons cannot open the network connection via the public network because the local controllable user interface 106 is not controllable by software.

In an embodiment, the data transfer from the network 104 to the automation system 102 is physically disabled, in other words physically blocked, when the local controllable user interface 106 is in the first state S1. Physically disabled means that there is no such a connection between the network 104 and the automation system 102 that can be used for transferring data from the network 104 to the automation system 102. The physical disabling of the data transfer from the network 104 to the automation system 102 ensures that the irrelevant persons, like hackers, cannot get the access to the automation system 102 via the public network 104 in the first state S1. In addition, because of the physical disabling, the data transfer from the network 104 to the automation system 102 may not be enabled software basis. In other words, the irrelevant persons may not be able to open the data transfer via the public network because of the physical disabling.

In an embodiment, the unidirectional data transfer from the automation system 102 to the network 104 may be carried out, for example, by a diode that allows the data transfer only in one direction, in this case, from the automation system 102 to the network 104. In other words, the unidirectional network connection, carried out by the diode, only allows the data transfer from one side of the network connection to another, but not the other way around. Hence, the diode may be used to ensure a security and protection of the automation system 102 from cyber-attacks of the public network. In some other embodiment, an opto-coupler may be used to achieve the bidirectional network connection. In addition to the diode and opto-coupler, any other component suitable for enabling the bidirectional connection from the automation system 102 to the network 104 may be used in the apparatus 100.

In an embodiment, the local controllable user interface 106, within the second state S2, is configured to enable a bidirectional data transfer between the protected automation system 102 and the network 104. In addition to the data transfer from the network 104 to the automation system 102, the local controllable interface within the second state S2 is configured to enable the data transfer from the automation system 102 to the network 104. The bidirectional data transfer may enable to transmit and receive the data at the same time between the automation system 102 and the network 104. Hence, the automation system 102 may be capable to receive, for example, the firmware update via the network connection from the cloud service, and at the same time provide information about a progress of the update to the cloud service.

In an embodiment, the unidirectional data transfer is carried out via a first data line 108 in the first state S1 of the local controllable user interface 106 and the bidirectional data transfer is carried out via a second data line 110 in the second state S2 of the local controllable user interface 106. A term "data line" refers to a circuitry used for the data transfer. In an embodiment, the data line is a serial bus or the like.

Referring to Figure 1A, in the first state S1 of the local controllable user interface 106, the unidirectional data transfer from the automation system 102 to the network 104 may be carried out via the first data line 108. In the second state S2 of the local controllable user interface 106, the bidirectional data transfer between the automation system 102 and the network 104 may be carried out via the second data line 110. When the first data line 108 is used for data transfer in the first state S1, then the second data line 110 may not be used. Respectively, when the second data line 110 is used for the data transfer in the second state S2, the first data line 108 may not be used.

In another embodiment, both the first and the second data lines 108, 110 may be used for the data transfer when the local controllable user interface 106 is in the second state S2. The first data line 108 may be used for the unidirectional data transfer from the automation system 102 to the network 104 and the second data line 110 may be used for bidirectional communication between the automation system 102 and the network 104.

In an embodiment, the data transfer from the automation system 102 to the network 104 is carried out via the first data line 108 and the data transfer from the network 104 to the automation system 102 is carried out via the second data line 110 in the second state S2 of the local controllable user interface 106. Referring to Figure 1B, in the second state S2 of the local controllable user interface, the data transfer from the automation system 102 to the network 104 may be carried out via the first data line 108 and the data transfer from the network 104 to the automation system 102 may be carried out via the second data line 110. In another example, the first data line 108 may be used for transferring data to the automation system 102 and the second data line 110 may be used for transferring data from the automation system 102. Hence, the transmitted and received data may be routed via the different data lines. This enables, for example, higher security requirements for the data line used for transmitting the data into the automation system 102. The incoming data traffic may also be individually monitored for ensuring a security of the data transfer and data line.

In an embodiment, the data transfer is carried out in the first S1 and the second state S2 of the local controllable user interface 106 via a data line having a first 116 and a second route 118 for the data transfer. Referring to Figure 1C, the data line 108 between the automation system 102 and the network 104 comprises two ends 112, 114. The end points 112, 114 are opposed to each other from data transfer point of view. For example, when transferring data from the automation system 102 to the network 104 via the data line 108, the first end 112 can be seen as a start point and the second end 114 as an end point of data line. The first end 112 may be an input and the second end 114 may be an output of the data line and hence, the ends 112, 114 may be opposed from data transfer point of view. When the data is transferred from the network 104 to the automation system 102, the ends 112, 114 may be the other way around, the second end 114 may be the input and the first end 112 may be the output. In the first state S1 of the local controllable interface 106, the data may be transferred via a first route 116 of the data line 108, wherein the data line is unidirectional from the automation system 102 to the network 104. In the second state S2 of the local controllable user interface 106, the data may be transferred via a second route 118 of the data line 108, wherein the data line 108 is bidirectional between the automation system 102 and the network 104.

In an embodiment, the first route 116 is unidirectional from the automation system 102 to the network 104 and the second route 118 is unidirectional from the network 104 to the automation system 102. In the first state S1 of the local controllable user interface 106, the data may be transferred from the automation system 102 to the network 104 via the first route 116. In the second state S2 of the local controllable user interface 106, the data may be transferred from the automation system 102 to the network via the first route 116 and from the network 104 to the automation system 102 via the second route 118. Hence, both the first and the second routes may be used for the data transfer in the second state S2.

In an example, the first route 116 of the data line 108 may be carried out by the diode allowing data transfer only in one direction. The second route 118 may use the same data line 108 having common ends 112, 114 with the first route, but the diode may be bypassed such that the data transfer is possible in two directions. In another example, both routes 116, 118 may be carried out by the diode such that the first and the second routes 116, 118 may allow the data transfer only in one direction and the directions are opposite to each other. Then in the first state S1 only the first route may be used and in the second state S2 both of the routes may be used for enabling the bidirectional data transfer.

In an embodiment, the data transfer from the network 104 to the protected automation system 102 in the second state S2 of the local controllable user interface 106 is limited for a predetermined time window. The time window for the data transfer like, for example, the firmware update from the network 104 to the automation system 102 is determined beforehand and the data transfer is enabled only that time. In other words, the network connection from the network 104 to the automation system 102 is enabled only that predetermined time. The update may also be performed in several steps and the network connection may be disabled between the steps, when the data is not transferred from the network 104 to the automation system 102. Hence, the risk that the hackers may get the access to the automation system is reduced. In an embodiment, in the second state S2 of the local controllable user interface 106, the disabling and enabling of the data transfer may be performed also software basis.

In an embodiment, the local controllable user interface 106 is configured to return automatically to the first state S1 after the predetermined time window to prevent the data transfer from the network 104 to the protected automation system 102. Referring to Figure 2, the local controllable user interface is switched from first state S1 to the second state S2 in a point T1. The local controllable user interface 106 is in the second state S2 during the predetermined time window TW and after the time window TW, the local controllable user interface 106 is automatically returned to the first state S1. The apparatus 100 may comprise a mechanism to return the local controllable interface 106 to the first state.

In an embodiment, the local user interface 106 may be set to the second state S2 only by the physical contact of the user but from the second state S2 to the first state S1 also without physical contact of the the user like, for example, software basis. Hence, enabling the data transfer from the network 104 to the automation system 102 is not possible without the physical contact of the user of the local controllable user interface 106 but the disabling may be performed without physical contact of the user.

In an embodiment, the apparatus 100 comprises a monitoring unit configured to monitor the data transfer from the network 104 to the protected automation system 102. The monitoring means that the traffic in the data line is scanned, for example. The monitoring is performed to ensure that only the appropriate data which is planned to feed into the automation system 102 is transferred. Monitoring may also help to ensure that the irrelevant persons may not get the access to the automation system 102. For example, when the access of the hacker is detected, the network connection may be immediately disabled to prevent damages in the automation system 102. The network connection may be disabled also during the data transfer from the cloud services like, for example, during the firmware update, if the hacker is detected.

In an embodiment, the local controllable user interface 106 is nearby the protected automation system 102. The local controllable user interface 106 may be placed, for example, in the same facility with the automation system 102. Locating the controllable user interface 106 nearby the automation system 102 ensures that only the relevant persons may operate the local controllable user interface 106. In an example, the automation system 102 may be a paper machine or part of it in a paper mill. The local controllable user interface 106 may be placed next to the paper machine or it may be further from the paper machine but still in the paper mill. For example, a control room may be used for controlling the paper machine and the control room may be far from the paper machine but still in the paper mill. Hence, the local controllable user interface 106 may be placed in the control room. In some case, the control room may be far away from the factory and the factory is controlled remotely. Still, the local controllable interface may be placed in the control room. In another embodiment, the automation system 102 may be an engine of a ship or part of it. Then the local controllable user interface 106 may be placed anywhere in the ship such that the relevant persons in the ship are capable to use it.

In an embodiment, the local controllable user interface 106 is a part of the protected automation system 102. The local controllable user interface 106 may be integrated into the automation system 102. The local controllable user interface 106 may also be a separate module placed in the automation system 102. Placing the local controllable user interface 106 within the automation system 102 ensures higher security level because the persons who are operating the local controllable interface 106 must have physical access to the automation system 102.

In an embodiment, the local controllable user interface 106 is configured to perform a mechanical switch between the first state S1 and the second state S2 of the local controllable user interface 106. In the first state S1 of the local controllable user interface 106, the data line, in other words, circuitry from the automation system 102 to the network 104 is physically closed and circuitry from the network 104 to the automation system 102 is open. The closed circuitry means that the data can flow in the circuitry and the open circuitry means that the data cannot flow in the circuitry. In other words, when the circuitry is physically open, there is no connection between an input end and output end of the circuitry and when the circuitry is physically closed, there is the connection between the ends. When the local controllable user interface 106 is set to the second state S2, the circuitry from the network 104 to the automation system 102 is physically closed enabling the data transfer. Hence, the local controllable user interface 106 performs the mechanical switch between the first state S1 and the second state S2 by physically opening or closing the circuitry between the network 104 and automation system 102.

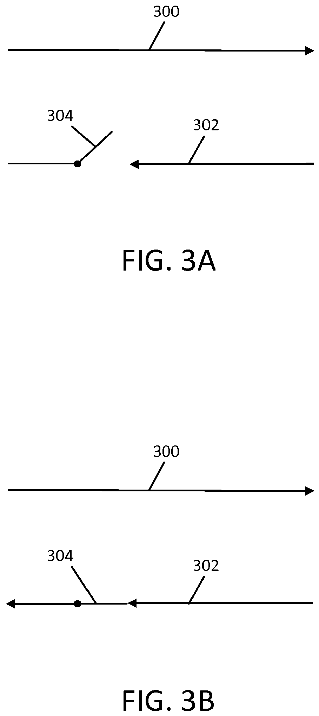

Figure 3A illustrates an embodiment, wherein the local controllable user interface 106 is in the first state S1. The circuitry 300 from the automation system 102 to the network 104 is physically closed enabling the data transfer. The circuitry 302 from the network 104 to the automation system 102 is physically open disabling the data transfer. The apparatus 100 may comprise a switching member 304 in the circuitry 302 for opening or closing the circuitry 302. The switching member 304 is in an open state in Figure 3A.

Figure 3B illustrates an embodiment, wherein the local controllable user interface 106 is in the second state S2. The local controllable user interface 106 is set to the second state S2 by the physical contact of the user, in other words, a force of the user is needed to mechanically switch the local controllable user interface between the first and the second state S1, S2. The circuitry 300 from the automation system 102 to the network 104 is physically closed in the second state S2 enabling the data transfer. When the local controllable user interface is set to the second state S2, the switching member 304 physically closes the circuitry 302 from the network 104 to the automation system 102 and enables the data transfer.

Hence, the local controllable user interface 106 performs the mechanical switch between the first state S1 and second state S2 by moving the switching member 304 that opens or closes the circuitry 302. The force of the user conducts mechanically to the local controllable user interface 106 and this force switch the state of the local controllable user interface 106.

In an embodiment, the local controllable user interface comprises a mechanical switch. The mechanical switch may comprise a first position and a second position, wherein the first position may be the first state S1 and the second position may be the second state S2 of the local controllable user interface 106. Hence, the mechanical switch closes the circuitry from the network 104 to the automation system 102 when set to the second position S2 and opens the circuitry when set to the first position S1.

In an embodiment, the local user interface comprises a jumper. The jumper, when assembled, may close the circuitry and hence enables the data transfer from the network 104 to the automation system 102. Removing the jumper opens the circuitry and disables the data transfer from the network 104 to the automation system 102. Hence, the first state S1 of the local controllable user interface 106 corresponds a situation wherein the jumper is off and the second state S2 of the local controllable user interface 106 corresponds a situation wherein the jumper is on.

In an embodiment, the local controllable user interface comprises a dongle. Physical connecting of the dongle may close the circuitry between the network 104 and the automation system 102 and it may enable the data transfer. Removing the dongle opens the circuitry and data transfer is disabled. Hence, the first state S1 of the local controllable user interface 106 corresponds a situation wherein the dongle is not connected and the second state S2 of the local controllable user interface 106 corresponds a situation wherein the dongle is connected. The dongle may be connected to the apparatus 100 or to the automation system 102, for example.

In an embodiment, the local controllable user interface 106 comprises a press button. The press button may be physically pressed by the user to change the states of the local controllable user interface 106. The press button may control, for example, a mechanical switch that closes or opens the circuitry. For example, a first press of the press button may close the circuitry and a second press may open the circuitry. In an embodiment, the two press buttons may be used, wherein a first button closes the circuitry and a second button opens the circuitry.

In an embodiment, the press button is a touch screen. The touch screen may not necessarily need the physical contact of the user. In some case, the touch screen may detect the pressing already before the user actually touches the surface of the screen. Anyway, the user may press the touch screen to change the state of the local controllable user interface and pressing may be seen as a physical contact of the user.

In an embodiment, a software of the automation system 102 may be capable to detect the state of the local controllable user interface 106 and configure a user interface of the automation system 102 accordingly. The user interface of the automation system 102 may present to the user only the operations that are possible to perform in that certain state of the local controllable user interface 106. For example, the need for the firmware update may not be presented in the first state S1 of the local controllable user interface 106 because it is not possible to perform in the first state S1, but in the second state S2 the need for the firmware update is presented because it is possible to perform in the second state.

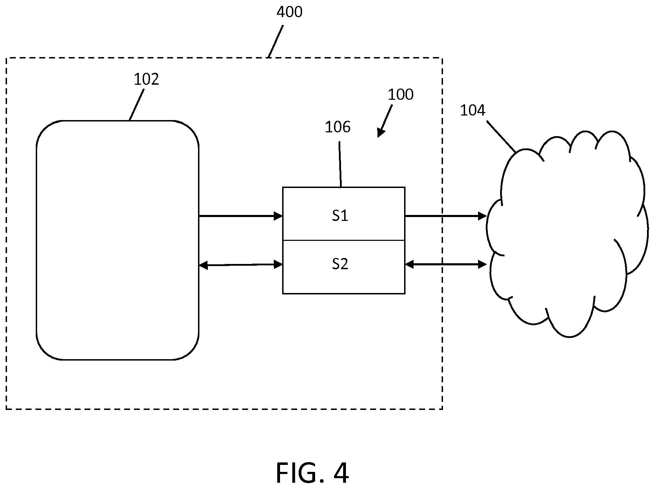

Figure 4 illustrates a system 400 for securing the data transfer between the protected automation system 102 and the network 104 according to an embodiment. Referring to Figure 4, the system 400 comprises: the protected automation system 102; and the apparatus 100 according to claims 1 - 13 for securing a data transfer between a protected automation system and a network.

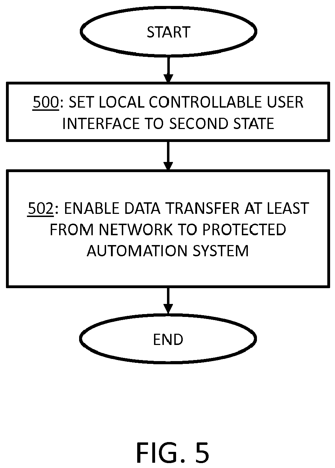

Figure 5 illustrates a flow chart of a method for securing the data transfer between the protected automation system 102 and the network 104 according to an embodiment, comprising: (block 500) setting, by a physical contact of a user, a local controllable user interface from a first state to a second state, wherein in the first state the data transfer is enabled from the protected automation system to the network and disabled from the network to the protected automation system, and wherein in the second state the data transfer is enabled at least from the network to the protected automation system; and (block 502) enabling, by the local controllable user interface, a data transfer at least from the network to the protected automation system.

The next example describes how the invention may be applied for securing the data transfer between the protected automation system and the network. The automation system may be connected with the cloud service such that the system is capable to transmit the data to the cloud service but is not capable to receive the data because of security reasons. A manufacturer of the automation system may provide the cloud service, for example. The automation system may provide a request to the cloud service for updating the firmware of the system. The cloud service may prepare a firmware update package for the automation system and a representative of the cloud service may then contact the user of the automation system and request to set local controllable user interface from the first state to the second state and hence, to enable the data transfer from the cloud to the automation system. The user of the automation system must physically set the local controllable user interface from the first state to the second state. Hence, the user must communicate with the representative of the cloud service when to change the state of the local controllable user interface and enable the data transfer from the cloud service.

In other example, the automation system monitors the state of the local controllable user interface. If the local controllable user interface is in the first state, the automation system detects that only the unidirectional data transfer from the automation system to the networks is possible and hence, all operations in which the bidirectional data transfer is needed are disabled and may not be visible in the automation system. In other words, the automation system may not be capable to request, for example, the firmware update when the local controllable user interface is in the first state. When the local controllable user interface is set to the second state and the bidirectional data transfer is enabled, the automation system may be capable to check, for example, the needed firmware updates. In other words, in the first state of the local controllable user interface, the automation system may detect and perform the operations which are possible to do in the first state, and in the second state of the local controllable user interface, the automation system may detect and perform the operations which are possible to do in the second state.

When the user has agreed with the cloud service a timeframe for the update the local controllable user interface is set to the second state and the firmware of the automation system can be updated. The enabled data line from the cloud service to the automation system may be monitored to detect possible security issues, like hackers. When the data is transferred the local controllable user interface is set back to the first state and the network connection between the network and automation system is physically disabled.

In some case, the user of the automation system may contact the representative of the cloud service when noticing a need for the data transfer from the cloud service to the automation system. There may be, for example, possibility to book a remote service session in an internet portal, where the user may register the automation system and perform a fleet management. The internet portal may be accessed by a mobile device and/or computer via a webpage and/or mobile application.

In addition, passwords and/or security codes may be used between the user of the automation system and the representative of the cloud service. For example, when the user of the automation system contacts the cloud service, there may be the password or security code that must be given by the representative of the cloud service. These actions reduce the risk that some irrelevant person requests to open the data line to the automation system and can cause damages to the automation system.

The described operation model makes possible to achieve very safe system for connecting the protected automation system to the network like, for example, the cloud service and enable the data transfer to the automation system.

A term "network" and/or "network connection" may refer to the internet connection in the application. The network connection may comprise, for example, the Ethernet or wireless interface like, for example, 3G, 4G, 5G, NB-IoT or the like.

It will be obvious to a person skilled in the art that, as the technology advances, the inventive concept can be implemented in various ways. The invention and its embodiments are not limited to the examples described above but may vary within the scope of the claims.

## Claims

1. An apparatus for securing a data transfer between a protected automation system and a network, comprising:
a local controllable user interface coupled with the protected automation system, wherein the local controllable user interface comprises a first state and a second state,
wherein the local controllable user interface within the first state is configured to enable a unidirectional data transfer from the protected automation system to the network and disable the data transfer from the network to the protected automation system, and
wherein the local controllable user interface, when set to the second state by a physical contact of a user, is configured to enable at least the data transfer from the network to the protected automation system.

2. The apparatus according to claim 1, wherein the local controllable user interface in the first state is configured to physically disable the data transfer from the network to the protected automation system.

3. The apparatus according to any preceding claim, wherein the local controllable user interface within the second state is configured to enable a bidirectional data transfer between the protected automation system and the network.

4. The apparatus according to any preceding claim, wherein the unidirectional data transfer is carried out via a first data line in the first state of the local controllable user interface and, wherein the bidirectional data transfer is carried out via a second data line in the second state of the local controllable user interface.

5. The apparatus according to claims 1 - 3, wherein the data transfer from the protected automation system to the network is carried out via the first data line and the data transfer from the network to the automation system is carried out via the second data line in the second state of the local controllable user interface.

6. The apparatus according to claims 1 - 3, wherein the data transfer is carried out via a data line having a first and a second route for the data transfer in the first and the second state of the local controllable user interface.

7. The apparatus according to any preceding claim, wherein the data transfer from the network to the protected automation system in the second state of the local controllable user interface is limited for a predetermined time window.

8. The apparatus according to claim 7, wherein the local controllable user interface is configured to returned automatically to the first state after the predetermined time window.

9. The apparatus according to any preceding claim, wherein the apparatus comprises a monitoring unit configured to monitor the data transfer from the network to the protected automation system.

10. The apparatus according to any preceding claim, wherein the local controllable user interface is nearby the protective automation system.

11. The apparatus according to any preceding claim, wherein the local controllable user interface is a part of the protective automation system.

12. The apparatus according to any preceding claim, wherein the local controllable user interface is configured to perform a mechanical switch between the first and the second state of the local controllable user interface.

13. The apparatus according to claim 12, wherein the local controllable user interface comprises a mechanical switch, a jumper and/or a dongle.

14. A system for securing a data transfer between a protected automation system and a network, comprising an apparatus according to claims 1 - 13.

15. A method for securing a data transfer between a protected automation system and a network, comprising:
setting, by a physical contact of a user, a local controllable user interface from a first state to a second state, wherein in the first state the data transfer is enabled from the protected automation system to the network and disabled from the network to the protected automation system, and wherein in the second state the data transfer is enabled at least from the network to the protected automation system; and
enabling, by the local controllable user interface, the data transfer at least from the network to the protected automation system.
